# EUROPEAN PATENT APPLICATION

(11) **EP 4 589 732 A1**
(43) Date of publication of application: **23.07.2025**
(21) Application number: 24197418.7
(22) Date of filing: 29.08.2024
(51) Int. Cl.: H01M 10/613, H01M 10/653, H01M 10/655, H01M 10/6557, H01M 50/204, H01M 50/209

(54) **BATTERY PACK STRUCTURE WITH DAMAGE CONTROL MEANS**

(30) Priority: 19.01.2024 KR 20240008595
(71) Applicant: SAMSUNG SDI CO., LTD., Yongin-si, Gyeonggi-do 17084 (KR)
(72) Inventor: IN, Dong Seok, 16678 Suwon-si (KR); KIM, Jin Beom, 16678 Suwon-si (KR)
(74) Representative: Marks & Clerk LLP

(57) **Abstract**

An energy storage system according to one or more embodiments of the present disclosure includes: a container; a plurality of accommodation portions in the container and configured to accommodate a battery rack or an air conditioner; a partition wall between each pair of adjacent accommodation portions; a ventilation hole passing through the partition wall and connecting with the adjacent accommodation portions; and a blocking member configured to selectively open or close the ventilation hole. According to the present disclosure, in normal times, internal air of any one accommodation portion is allowed to be transferred to a neighboring accommodation portion through a ventilation hole, thereby uniformly maintaining the internal environment of a plurality of accommodation portions.

## Description

### BACKGROUND

### 1. Field

Aspects of embodiments of the present disclosure relate to an energy storage system.

### 2. Description of the Related Art

Generally, an energy storage system (ESS) is a device capable of storing surplus electricity or electricity produced using renewable energy. An energy storage system may be constructed by installing a plurality of battery modules in racks and accommodating the plurality of racks in a container. A battery module may be constructed by assembling a plurality of secondary batteries, which are electrically connected to each other, in various structures.

In the event of a fire in such an energy storage system due to thermal runaway or other electrical defects occurring during a charging or discharging process of a secondary battery, there is a risk that all components inside a container are exposed to the fire and are burned or damaged. In order to prevent such a risk, a fire compartment may be built by erecting a firewall that does not allow ventilation in the middle of a container. However, in this case, separate air conditioning equipment is required for each compartment, which increases costs and is disadvantageous in terms of battery energy density.
The above information disclosed in this Background section is only for enhancement of understanding of the background of the present disclosure and therefore it may contain information that does not form the prior art.

### SUMMARY

Aspects of the present disclosure are directed to providing an energy storage system which enables smooth air circulation in normal times (e.g., during normal operation) and enables a fire compartment to be built in the event of a fire.

These and other aspects and features of the present disclosure will be described in or will be apparent from the following description of some embodiments of the present disclosure.

According to some embodiments of the present disclosure, there is provided an energy storage system including: a container; a plurality of accommodation portions in the container and configured to accommodate a battery rack or an air conditioner; a partition wall between each pair of adjacent accommodation portions; a ventilation hole passing through the partition wall and connecting with the adjacent accommodation portions; and a blocking member configured to selectively open or close the ventilation hole.

In some embodiments, the blocking member may include: a damper member rotatably connected to the partition wall and configured to open or close the ventilation hole according to a rotation direction; and an actuator connected to the damper member and configured to generate a rotational force to adjust the rotation direction of the damper member.

In some embodiments, the blocking member may include: a damper member rotatably connected to the partition wall and configured to open or close the ventilation hole by rotating in a first direction; a rod connected to the damper member and configured to apply a rotational force to the damper member in the first direction; a rope connected to the container and the rod and configured to apply a rotational force to the damper member in a direction opposite to the first direction; and an actuator configured to generate a driving force to cut the rope.

In some embodiments, the rope may be cut when heated to a set temperature or more.

In some embodiments, a plurality of partition walls and a plurality of blocking members are provided, and wherein the ropes provided in each of the blocking members are connected to each other.

In some embodiments, the blocking member may include: a movable partition wall positioned to face the partition wall and movably installed between a first position and a second position; a movable hole formed to pass through the movable partition wall and positioned to face the ventilation hole as the movable partition wall is positioned at the first position; a rope connected to the movable partition wall and configured to position the movable partition wall at the first position; and an actuator configured to generate a driving force to cut the rope, wherein, in response to the rope being cut, the movable partition wall moves from the first position to the second position.

In some embodiments, the rope may be cut when heated to a set temperature or more.

In some embodiments, a plurality of partition walls and a plurality of blocking members may be provided, and the ropes provided in each of the blocking members may be connected to each other.

In some embodiments, the blocking member further may include a guide rail configured to guide a movement of the movable partition wall.

In some embodiments, the energy storage system may further include: a detection member configured to collect environmental data inside at least one of the plurality of accommodation portions; and a controller configured to determine whether a fire has occurred based on the environmental data collected by the detection member and configured to control operations of the blocking member and the air conditioner.

In some embodiments, in response to determining that the fire has occurred, the controller may be configured to stop the operation of the air conditioner and to operate the blocking member to close the ventilation hole.

In some embodiments, the detection member may include: a temperature sensor configured to detect a temperature inside the at least one of the plurality of accommodation portions; and a smoke sensor configured to detect smoke generated inside the at least one of the plurality of accommodation portions.

In some embodiments, a plurality of temperature sensors may be installed in each of the accommodation portions, in response to a number of the temperature sensors that detect a temperature higher than or equal to a set temperature in any one of the accommodation portions being equal to a number n or more, the controller may be configured to determine that the fire has occurred; wherein n is a natural number of 2 or more.

In some embodiments, in response to determining that the fire has occurred, the controller may be configured to generate an emergency signal, and in response to a number of the temperature sensors that detect the temperature higher than or equal to the set temperature in any one of the accommodations portions being 1 or more and less than n, the controller may be configured to generate a warning signal.

In some embodiments, a plurality of smoke sensors may be installed in each of the accommodation portions. In response to a number of the smoke sensors that detect smoke in any one of the accommodation portions being equal to a number m or more, the controller may be configured to determine that the fire has occurred; wherein m is a natural number of 2 or more.

In some embodiments, in response to determining that the fire has occurred, the controller may be configured to generate an emergency signal, and in response to a number of the smoke sensors that detect smoke in any one of the accommodation portions being 1 or more and less than m, the controller may be configured to generate a warning signal.

In some embodiments, one or more temperature sensors and one or more smoke sensors may be installed in each of the accommodation portions, and in response to a temperature detected by any one of the temperature sensors being higher than or equal to a set temperature and smoke being detected by any one of the smoke sensors, the controller may be configured to determine that the fire has occurred.

In some embodiments, in response to determining that the fire has occurred, the controller may be configured to generate an emergency signal, and in response to a temperature detected by any one of the temperature sensors being higher than or equal to the set temperature and the smoke being detected by any one of the smoke sensors, the controller may be configured to generate a warning signal.

In some embodiments, the energy storage system may further include a fire extinguishing member configured to spray a fire extinguishing liquid into at least one of the plurality of accommodation portions.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a schematic perspective view illustrating a configuration of an energy storage system according to some embodiments of the present disclosure;
FIG. 2 is a schematic front view illustrating the configuration of the energy storage system according to some embodiments of the present disclosure;
FIG. 3 is a schematic plan view illustrating the configuration of the energy storage system according to some embodiments of the present disclosure;
FIG. 4 is a schematic perspective view illustrating a configuration of a blocking member according to some embodiments of the present disclosure;
FIG. 5 is a view illustrating a state in which the blocking member of FIG. 4 closes a ventilation hole according to some embodiments of the present disclosure;
FIG. 6 is a schematic block diagram illustrating the configuration of the energy storage system according to some embodiments of the present disclosure;
FIG. 7 is a schematic flowchart illustrating an operation process of the energy storage system according to some embodiments of the present disclosure;
FIGS. 8 to 10 are schematic flowcharts illustrating a process by which a controller determines whether a fire has occurred according to some embodiments of the present disclosure;
FIGS. 11 and 12 are schematic views illustrating an operation process of the energy storage system according to some embodiments of the present disclosure;
FIG. 13 is a schematic perspective view illustrating a configuration of an energy storage system according to some embodiments of the present disclosure;
FIG. 14 is a schematic front view illustrating the configuration of the energy storage system according to some embodiments of the present disclosure;
FIG. 15 is a schematic plan view illustrating the configuration of the energy storage system according to some embodiments of the present disclosure;
FIG. 16 is a schematic block diagram illustrating the configuration of the energy storage system according to some embodiments of the present disclosure;
FIG. 17 is a schematic perspective view illustrating a configuration of a blocking member according to some embodiments of the present disclosure;
FIG. 18 is a perspective view illustrating a state in which the blocking member of FIG. 17 closes a ventilation hole according to some embodiments of the present disclosure;
FIGS. 19 to 22 are schematic views illustrating an operation process of the energy storage system according to some embodiments of the present disclosure;
FIG. 23 is a schematic perspective view illustrating a configuration of an energy storage system according to some embodiments of the present disclosure;
FIG. 24 is a schematic front view illustrating the configuration of the energy storage system according to some embodiments of the present disclosure;
FIG. 25 is a schematic plan view illustrating the configuration of the energy storage system according to some embodiments of the present disclosure;
FIG. 26 is a schematic block diagram illustrating the configuration of the energy storage system according to some embodiments of the present disclosure;
FIG. 27 is a schematic perspective view illustrating a state in which a movable partition wall according to some embodiments of the present disclosure is disposed at a first position;
FIG. 28 is a schematic perspective view illustrating a state in which the movable partition wall according to some embodiments of the present disclosure is disposed at a second position;
FIG. 29 is a schematic enlarged view illustrating a configuration of a guide rail according to some embodiments of the present disclosure;
FIG. 30 is a schematic cross-sectional view illustrating the configuration of the guide rail according to some embodiments of the present disclosure; and
FIGS. 31 and 32 are schematic views illustrating an operation process of the energy storage system according to some embodiments of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the other part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

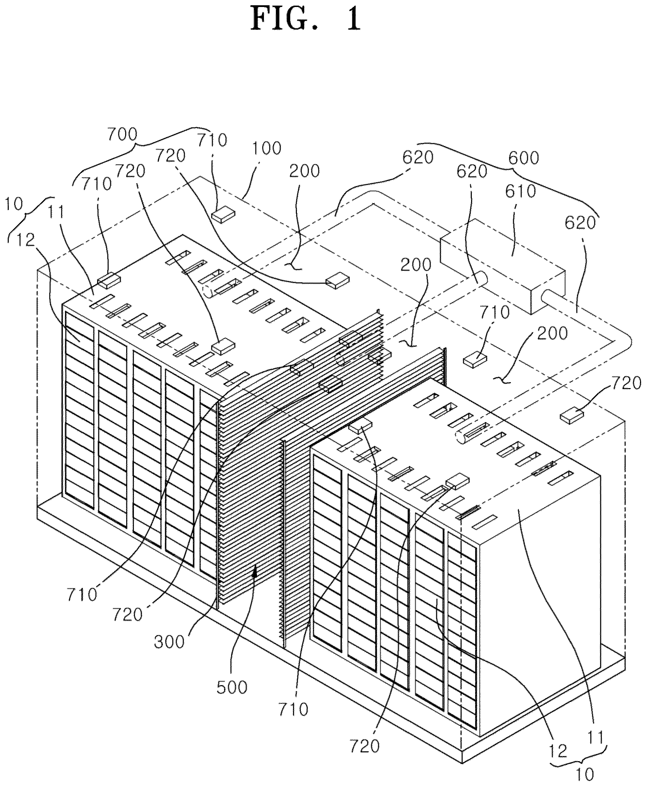

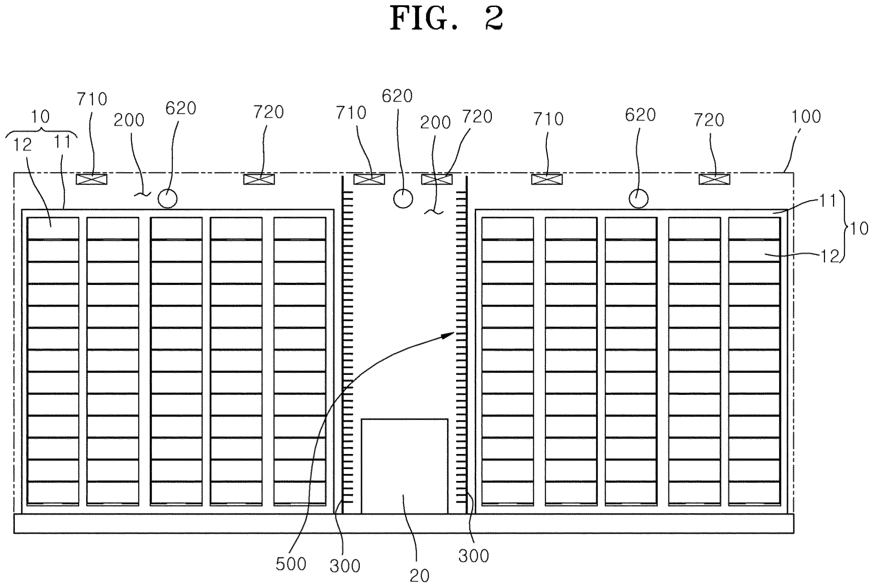

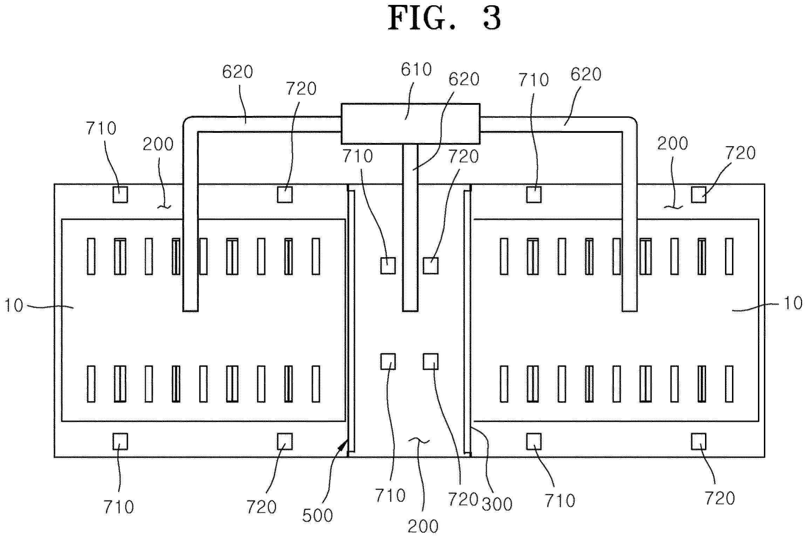

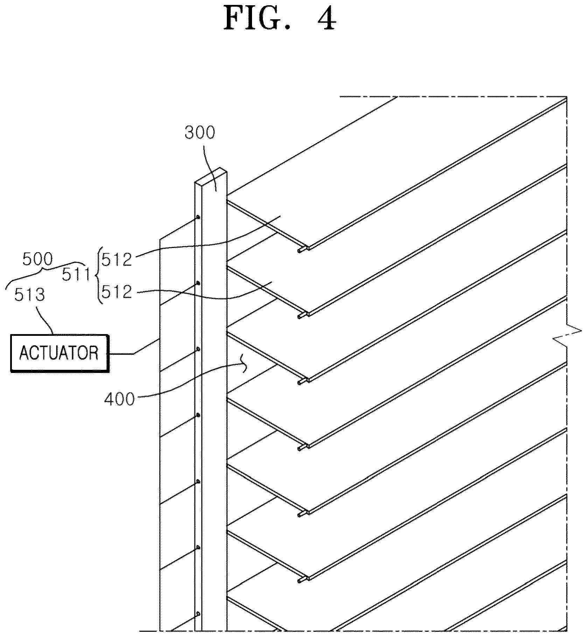

FIG. 1 illustrates a schematic perspective view illustrating a configuration of an energy storage system according to some embodiments of the present disclosure. FIG. 2 illustrates a schematic front view illustrating the configuration of the energy storage system according to some embodiments of the present disclosure. FIG. 3 illustrates a schematic plan view illustrating the configuration of the energy storage system according to some embodiments of the present disclosure. FIG. 4 illustrates a schematic perspective view illustrating a configuration of a blocking member according to some embodiments of the present disclosure.

Referring to FIGS. 1 to 4, the energy storage system according to some embodiments includes a container 100, an accommodation portion 200, a partition wall 300, a ventilation hole 400, and a blocking member 500.

The container 100 forms an approximate exterior of the energy storage system. The container 100 may be various suitable types of closed structures with a hollow interior, such as a stand-alone building, a room in a building, and a container. In addition to a rectangular parallelepiped shape shown in FIG. 1, a shape design of the container 100 may be changed to various shapes, such as a polyhedral shape or a cylindrical shape.

The accommodation portion 200 may be an empty space formed inside the container 100. A plurality of accommodation portions 200 may be provided. Although FIGS. 1 to 3 illustrate an example in which three accommodation portions 200 are formed, the number of the accommodation portions 200 is not limited thereto, and a design thereof may be changed to various numbers such as two or four.

The accommodation portions 200 may be disposed at different positions inside the container 100. For example, as shown in FIGS. 1 to 3, the plurality of accommodation portions 200 may be disposed in a line inside the container 100. For example, the plurality of accommodation portions 200 may be disposed in a grid form or stacked vertically inside the container 100. The shapes and volumes of the accommodation portions 200 may be the same or different from each other.

Each accommodation portion 200 may accommodate any one of a battery rack 10 and an air conditioner 20 therein.

The battery rack 10 may include a rack frame 11 having a plurality of storage spaces, and a plurality of battery modules 12 disposed inside the storage spaces of the rack frame 11 and electrically connected to each other. The battery module 12 may include a plurality of battery cells capable of storing or discharging power.

The air conditioner 20 may be a blower or a heating, ventilating, and air conditioning (HVAC) device that may adjust a flow rate, temperature, and humidity of surrounding air.

The battery rack 10 and the air conditioner 20 may each be accommodated in one of a pair of neighboring accommodation portions 200. For example, referring to FIGS. 1 to 3, in the three accommodation portions 200 disposed in a line inside the container 100, the air conditioner 20 may be accommodated in the accommodation portion 200 disposed at a central portion, and the battery rack 10 may be accommodated in each of the accommodation portions 200 disposed at the sides. However, the arrangement state of the battery rack 10 and the air conditioner 20 is not limited to those depicted in FIG. 1, and in embodiments in which at least one battery rack 10 and at least one air conditioner 20 are accommodated in the plurality of accommodation portions 200, a design may be variously changed.

The partition wall 300 is disposed between a pair of neighboring accommodation portions 200 and partitions the pair of adjacent accommodation portions 200 from each other. The partition wall 300 according to some embodiments may be formed to have an approximately flat shape. The partition wall 300 may be disposed parallel to a boundary surface between the pair of neighboring accommodation portions 200. The partition wall 300 may be disposed such that each of its surfaces faces one of the pair of neighboring accommodation portions 200. An area of the partition wall 300 may be formed to be larger than an area of the boundary surface between the pair of neighboring accommodation portions 200. The partition wall 300 may be made of a nonflammable and fire-resistant material, such as concrete, ceramic, or steel, to prevent or substantially reduce damage from flames or the like in the event of a fire and to contain the fire. A plurality of partition walls 300 may be provided. Each partition 300 may be individually disposed between the pair of neighboring accommodation portions 200.

The ventilation hole 400 (see, e.g., FIG. 4) may be formed to pass through the partition wall 300, and each of the sides thereof connects with one of the neighboring accommodation portions 200. That is, the ventilation hole 400 may serve as a path through which air may be transferred from one accommodation portion 200 to the other accommodation portion 200 of the pair of neighboring accommodation portions 200. A design may be variously changed in a range in which an area of the ventilation hole 400 is smaller than the area of the partition wall 300. A plurality of ventilation holes 400 may be formed. The plurality of ventilation holes 400 may be disposed to be spaced apart from each other in the partition wall 300. The plurality of ventilation holes 400 may be vertically disposed in a line or may also be disposed in two or more lines. Hereinafter, as shown in FIG. 4, an example in which the ventilation holes 400 are formed to pass through all areas except both ends of the partition wall 300 will be described.

The blocking member 500 selectively opens or closes the ventilation hole 400 using a driving force thereof. Accordingly, the blocking member 500 may allow internal air of one accommodation portion 200 to be transferred to the neighboring accommodation portion 200 through the ventilation hole 400 in normal times and may block flame or smoke generated in one accommodation portion 200 from being transmitted to the neighboring accommodation portion 200 through the ventilation hole 400 in the event of a fire. A plurality of blocking members 500 may be provided. The plurality of blocking members 500 may be individually installed for the ventilation holes 400 formed in each partition wall 300.

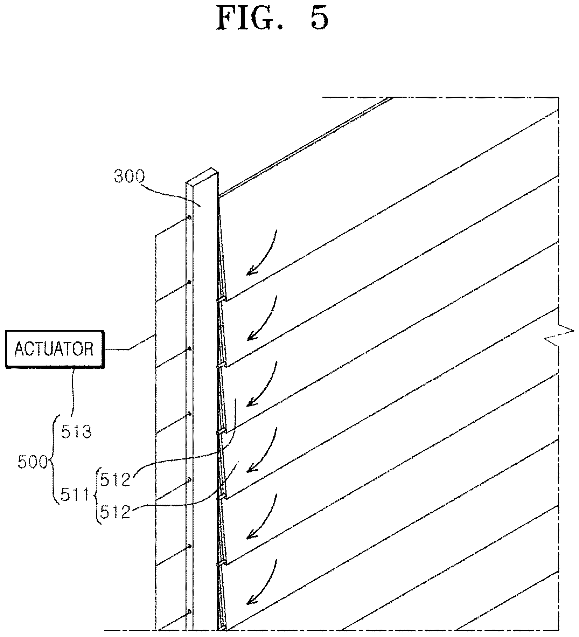

FIG. 5 is a view illustrating a state in which the blocking member in FIG. 4 closes the ventilation hole according to some embodiments of the present disclosure.

Referring to FIGS. 4 and 5, the blocking member 500 according to some embodiments may include a damper member 511 and an actuator 513.

The damper member 511 may be rotatably connected to the partition wall 300 and open or close the ventilation hole 400 according to a rotation direction. For example, the damper member 511 may rotate in a first direction to close the ventilation hole 400 and may rotate in a direction opposite to the first direction to open the ventilation hole 400. Here, the first direction may be a clockwise direction or a counterclockwise direction with respect to a rotation shaft of the damper member 511.

The damper member 511 according to some embodiments may include a plurality of dampers 512.

The damper 512 may be formed to have a flat plate shape. A longitudinal direction of the damper 512 may be parallel to a bottom surface of the container 100. Both sides of the damper 512 in the longitudinal direction may be rotatably connected to the partition wall 300 through a rotation shaft. Because a width direction of the damper 512 is perpendicular to the ventilation hole 400, the damper 512 may open the ventilation hole 400. In this state, as the damper 512 rotates in a first direction (e.g., clockwise direction in FIGS. 4 and 5), an inner surface thereof may be disposed to face the ventilation hole 400, and the ventilation hole 400 may be closed.

The plurality of dampers 512 may be provided. The plurality of dampers 512 may be disposed to be vertically spaced apart from each other by a certain interval. The sum of areas of the plurality of dampers 512 may be larger than an area of the ventilation hole 400. In this case, when a pair of neighboring dampers 512 closes the ventilation hole 400, the neighboring dampers 512 may be disposed such that at least partial areas thereof overlap each other. Accordingly, when the plurality of dampers 512 fully rotate in the first direction, the dampers 512 may close the ventilation hole 400 without any gaps.

Fire-resistant paint may be applied on a surface of the damper 512 to prevent or substantially reduce heat damage in the event of a fire.

The actuator 513 is connected to the damper member 511 and may generate a rotational force to control a rotation direction of the damper member 511. The actuator 513 according to some embodiments may include a motor that receives power from the outside to generate a rotational force, and a power transmission part, such as a gear or pulley, that is connected to the motor and transmits the rotational force of the motor to the damper member 511.

The motor may be formed in a number corresponding to the plurality of dampers 512 or may be formed singly (e.g., a single motor may be provided). The motor may be disposed inside the accommodation portion 200 or may be disposed outside the container 100.

The power transmission part may be individually connected to the rotation shafts of the plurality of dampers 512. The power transmission part may receive a rotational force from the motor to rotate the plurality of dampers 512 at the same angular speed at the same time.

The energy storage system according to some embodiments may further include a fire extinguishing member 600 (see, e.g. FIG. 1).

When a fire has occurred in the accommodation portion 200, the fire extinguishing member 600 sprays a fire extinguishing liquid into the accommodation portion 200. That is, the fire extinguishing member 600 may function as a component that extinguishes a fire generated in the accommodation portion 200 in the event of the fire.

The fire extinguishing member 600 according to some embodiments may include a storage portion 610 that stores a fire extinguishing liquid, and a spray line 620 extending from the storage portion 610 into the accommodation portion 200.

The storage portion 610 may be various suitable types of storage containers capable of storing a fire extinguishing liquid.

The spray line 620 may be a tube with one side connected to the storage portion 610 and the other side passing through the container 100 and disposed inside the accommodation portion 200. In the spray line 620, a pump that supplies the fire extinguishing liquid stored in the storage portion 610 to the spray line 620 may be installed, and a spray nozzle that sprays the fire extinguishing liquid flowing along the spray line 620 into the accommodation portion 200 may be installed. A plurality of spray lines 620 may be provided. The plurality of spray lines 620 may each be individually disposed inside one of the accommodation portions 200.

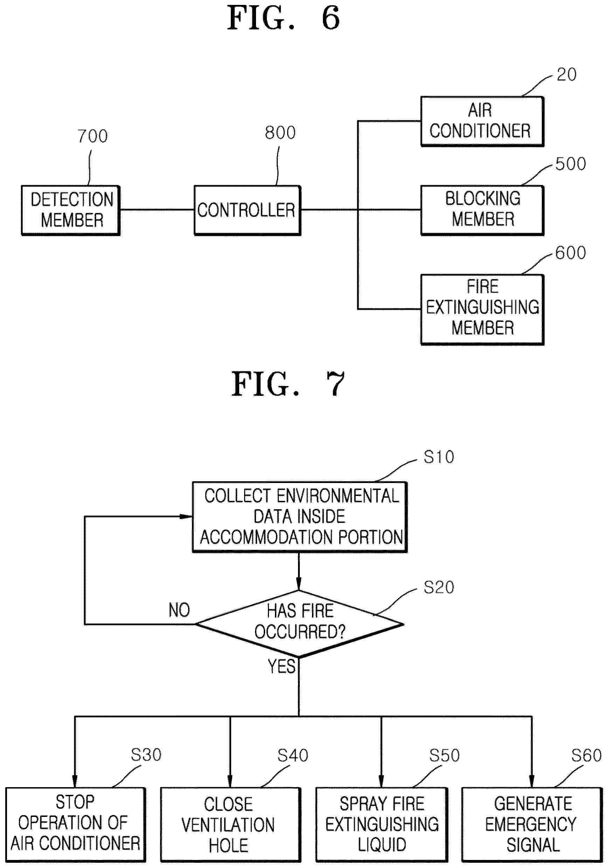

FIG. 6 is a schematic block diagram illustrating the configuration of the energy storage system according to some embodiments of the present disclosure.

Referring to FIGS. 1 to 3 and FIG. 6, the energy storage system according to some embodiments may further include a detection member 700 and a controller 800.

The detection member 700 collects environmental data inside the accommodation portion 200. Here, the environmental data may include information about an internal temperature of the accommodation portion 200 and information about the presence of smoke.

The detection member 700 according to some embodiments may include a temperature sensor 710 and a smoke sensor 720.

The temperature sensor 710 detects the internal temperature of the accommodation portion 200. The temperature sensor 710 according to some embodiments may be a thermal sensor, an infrared sensor, or the like and capable of detecting a temperature. A plurality of temperature sensors 710 may be provided. The plurality of temperature sensors 710 may be individually installed inside each accommodation portion 200. The plurality of temperature sensors 710 may be installed in each accommodation portion 200. As an example, as shown in FIGS. 1 to 3, two temperature sensors 710 may be installed in each accommodation portion 200.

The smoke sensor 720 detects smoke generated inside the accommodation portion 200. The smoke sensor 720 according to some embodiments may be various suitable types of smoke detectors, such as an ionization smoke sensor and a photoelectric smoke sensor capable of detecting smoke generated by combustion. A plurality of smoke sensors 720 may be provided. The plurality of smoke sensors 720 may be individually installed inside each accommodation portion 200. The plurality of smoke sensors 720 may be installed in each accommodation portion 200. As an example, as shown in FIGS. 1 to 3, two smoke sensors 720 may be installed in each accommodation portion 200.

The controller 800 controls overall operations of the blocking member 500, the fire extinguishing member 600, and the air conditioner 20. For example, the controller 800 may determine whether a fire has occurred in the accommodation portion 200 based on the data detected by the detection member 700, and based on the determined information, the controller 800 may control the operations of the blocking member 500, the fire extinguishing member 600, and the air conditioner 20.

In addition, the controller 800 may determine whether a fire has occurred in the accommodation portion 200 based on the environmental data collected by the detection member 700 and may generate a warning signal or an emergency signal based on the determined information. The warning signal and the emergency signal may be signals that may be distinguished from each other by a user. The warning signal and the emergency signal may include a signal, such as an alarm sound, which is audibly recognizable by a user or a signal, such as an image, illumination, or a combination thereof, which is visually recognizable by the user.

The controller 800 may include an electronic control device that monitors the data detected by the detection member 700 in real time and controls the operations of the blocking member 500, the fire extinguishing member 600, and the air conditioner 20 based on the monitored information. Such an electronic control device may be implemented as an integrated circuit (IC), a microcontroller (pC), a microprocessor, an application specific integrated circuit (ASIC), a combination thereof, or the like that may control a plurality of hardware or software components by running an operating system or application and may perform various data processing and operations. In addition, the controller 800 may include an acoustic device configured to generate an auditory recognizable signal, a visually recognizable lighting device, or a display.

Hereinafter, the operation of the energy storage system according to some embodiments of the present disclosure will be described.

FIG. 7 is a schematic flowchart illustrating an operation process of the energy storage system according to some embodiments of the present disclosure.

Referring to FIGS. 1 to 7, the detection member 700 collects environmental data inside the accommodation portion 200 (S10).

The controller 800 determines whether a fire has occurred based on the data detected by the detection member 700 (S20).

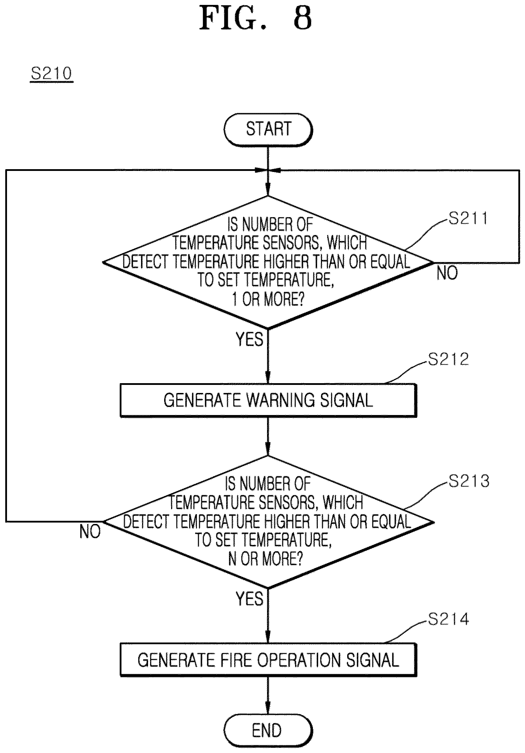

FIGS. 8 to 10 are schematic flowcharts illustrating a process by which the controller determines whether a fire has occurred according to some embodiments of the present disclosure.

Referring to FIG. 8, in operation S20, the controller 800 may determine whether a fire has occurred based on temperature data detected by the temperature sensor 710 (S210).

For example, the controller 800 determines whether the number of temperature sensors 710, which detect a temperature higher than or equal to a set temperature in any one of the accommodation portions 200, is 1 or more (S211).

When the number of temperature sensors 710, which detect the temperature higher than or equal to the set temperature, is 1 or more in operation S211, the controller 800 generates a warning signal (S212).

The controller 800 determines whether the number of temperature sensors 710, which detect the temperature higher than or equal to the set temperature in any one of the accommodation portions 200, is n or more (S213). Here, n may be any one of natural numbers of 2 or more. As shown in FIG. 1, when two temperature sensors 710 are installed in each accommodation portion 200, n may be 2.

When the number of temperature sensors 710, which detect the temperature higher than or equal to the set temperature, is n or more in operation S213, the controller 800 generates a fire operation signal (S214). The fire operation signal may be an electrical signal for operating the blocking member 500, the fire extinguishing member 600, and the air conditioner 20.

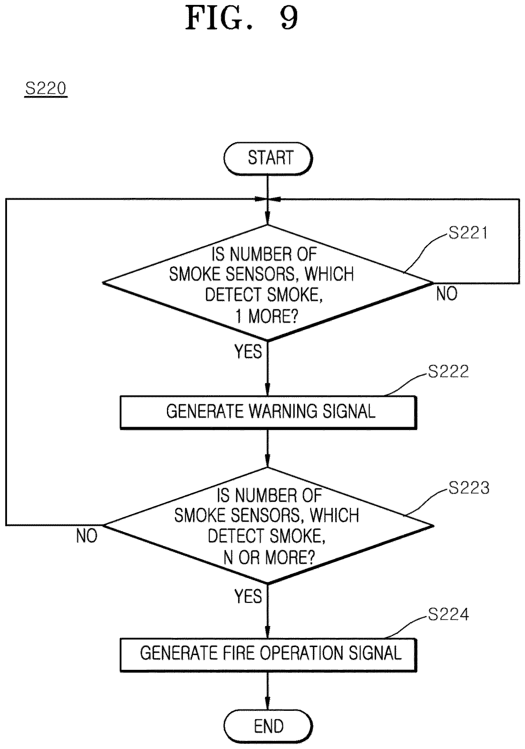

Referring to FIG. 9, in operation S20, the controller 800 may determine whether a fire has occurred based on smoke data detected by the smoke sensor 720 (S220).

For example, the controller 800 determines whether the number of smoke sensors 720, which detect smoke in any one of the accommodation portions 200, is 1 or more (S221).

When the number of smoke sensors 720, which detect smoke, is 1 or more in operation S221, the controller 800 generates a warning signal (S222).

The controller 800 determines whether the number of smoke sensors 720, which detect smoke in any one of the accommodation portions 200, is n or more (S223). Here, n may be any one of natural numbers of 2 or more. As shown in FIG. 1, when two smoke sensors 720 are installed in each accommodation portion 200, n may be 2.

When the number of smoke sensors 720, which detect smoke, is n or more in operation S223, the controller 800 generates a fire operation signal (S224).

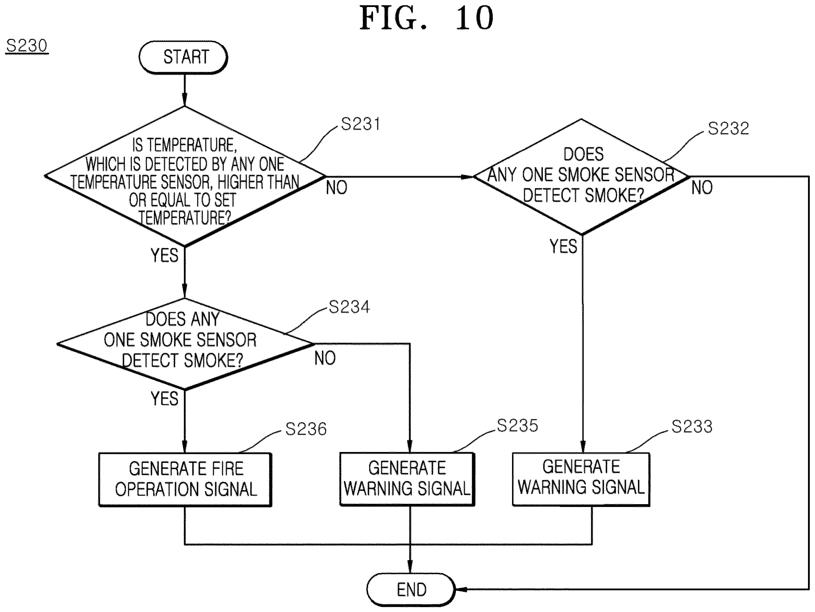

Referring to FIG. 10, in operation S20, based on a combination of the temperature data detected by the temperature sensor 710 and the smoke data detected by the smoke sensor 720 in one of the accommodation portions 200, the controller 800 may determine whether a fire has occurred (S230).

That is, in operation S230, when a temperature detected by any one temperature sensor 710 is higher than or equal to the set temperature and smoke is detected by any one smoke sensor 720, the controller 800 may determine that a fire has occurred. In addition, in operation S230, when the temperature detected from any one temperature sensor 710 is higher than or equal to the set temperature or when smoke is detected from any one smoke sensor 720, the controller 800 may generate only a warning signal.

For example, as shown in FIG. 10, the controller 800 determines whether a temperature detected by any one temperature sensor 710 among the plurality of temperature sensors 710 installed in any one of the accommodation portions 200 is higher than or equal to the set temperature (S231).

When temperatures detected by all the temperature sensors 710 are lower than the set temperature in operation S231, the controller 800 determines whether any one smoke sensor 720 among the plurality of smoke sensors 720 has detected smoke (S232).

When any one smoke sensor 720 has detected smoke in operation S232, the controller 800 generates a warning signal (S233).

When none of the smoke sensors 720 has detected smoke in operation S232, the controller 800 may take no action, and operation 230 may be in an end state (END).

When the temperature detected from any one temperature sensor 710 is higher than or equal to the set temperature in operation S231, the controller 800 determines whether any one smoke sensor 720 has detected smoke (S234).

When all of the smoke sensors 720 do not detect smoke in operation S234, the controller 800 generates a warning signal (S235).

When any one smoke sensor 720 has detected smoke in operation S234, the controller 800 generates a fire operation signal (S236).

The controller 800 may perform all of operations S210, S220, and S230 or may also perform only one or a combination of two of operations S210, S220, and S230.

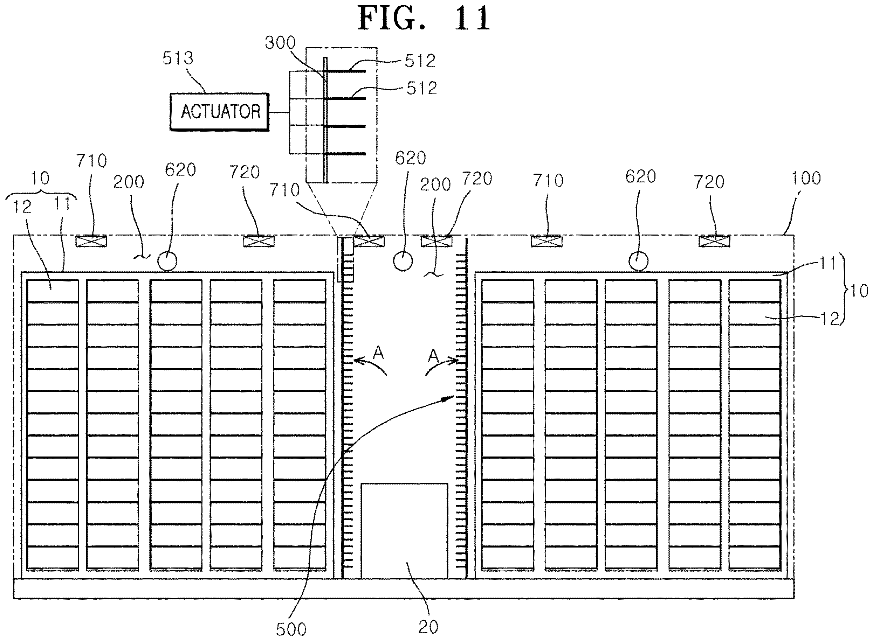

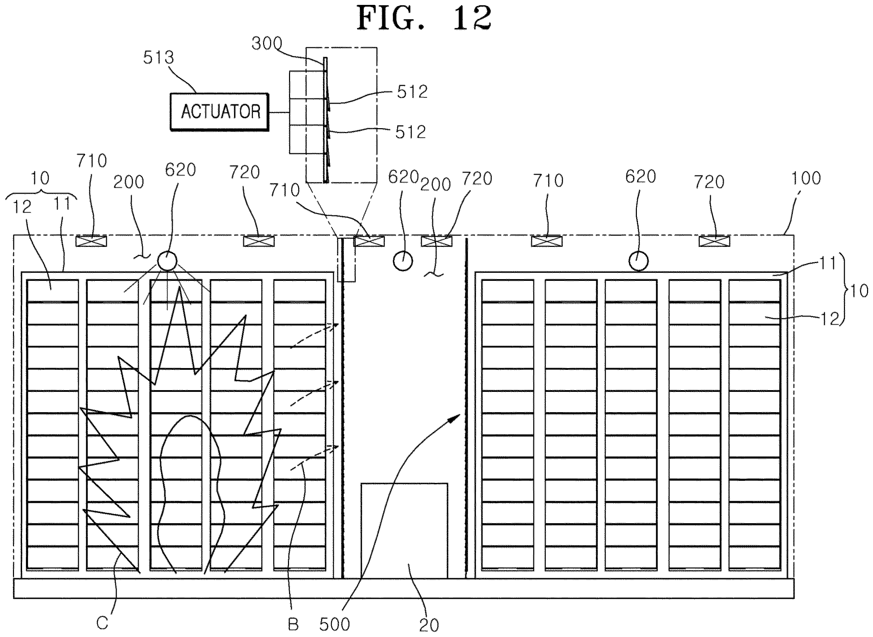

FIGS. 11 and 12 are schematic views illustrating an operation process of the energy storage system according to some embodiments of the present disclosure.

Referring to FIG. 11, when the controller 800 determines that a fire has not occurred in operation S20, the damper 512 maintains a state in which the width direction is perpendicular to the ventilation hole 400, and the ventilation hole 400 is maintained in an open state.

As the ventilation hole 400 is maintained in an open state, air A flowing inside one accommodation portion 200 may receive a flow force from the air conditioner 20 to be transferred into a neighboring accommodation portion 200 through the ventilation hole 400 and may circulate through the plurality of accommodation portions 200.

Referring to FIGS. 7 and 12, when the controller 800 determines that a fire has occurred in operation S20, the controller 800 transmits a fire operation signal to the air conditioner 20 to stop the operation of the air conditioner 20 (S30).

The controller 800 may transmit the fire operation signal to the actuator 513 to close the ventilation hole 400 (S40).

For example, the actuator 513 may generate a rotational force when receiving the fire operation signal from the controller 800, and the damper 512 rotates in the first direction.

The damper 512 rotates in the first direction and closes the ventilation hole 400.

As the ventilation hole 400 is completely closed, a flame C and smoke B generated inside the accommodation portion 200 may not flow into the ventilation hole 400, and fire propagation through the ventilation hole 400 may be blocked.

The controller 800 may transmit a fire operation signal to the extinguishing member 600, and the extinguishing member 600 may spray a fire extinguishing liquid into the accommodation portion 200 to extinguish a fire in the accommodation portion 200 (S50). In this case, the controller 800 may control the operation of the pump such that the fire extinguishing liquid is supplied only to the spray line 620 disposed inside the accommodation portion 200, in which it is determined that a fire has occurred, among the plurality of spray lines 620.

When the controller 800 determines that a fire has occurred, the controller 800 may generate an emergency signal (S60).

Hereinafter, the configuration of an energy storage system according to some other embodiments of the present disclosure will be described.

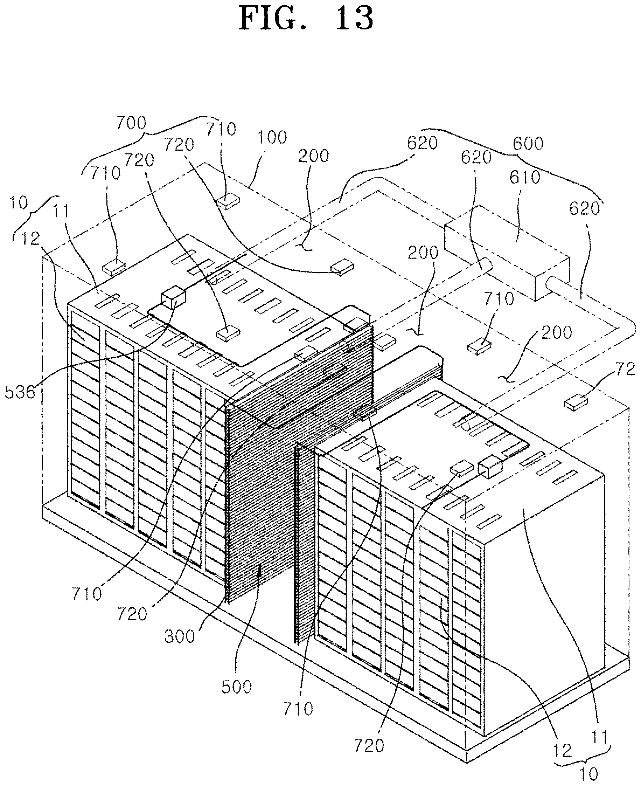

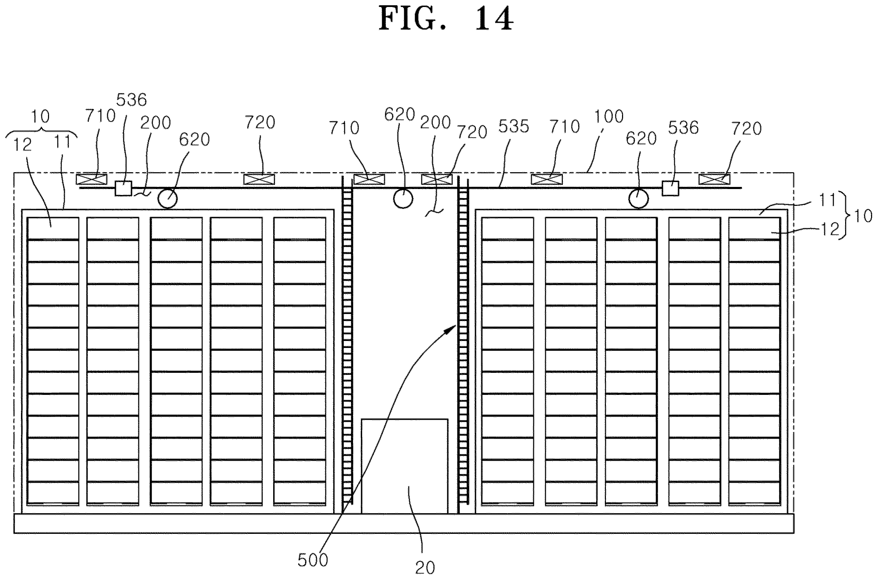

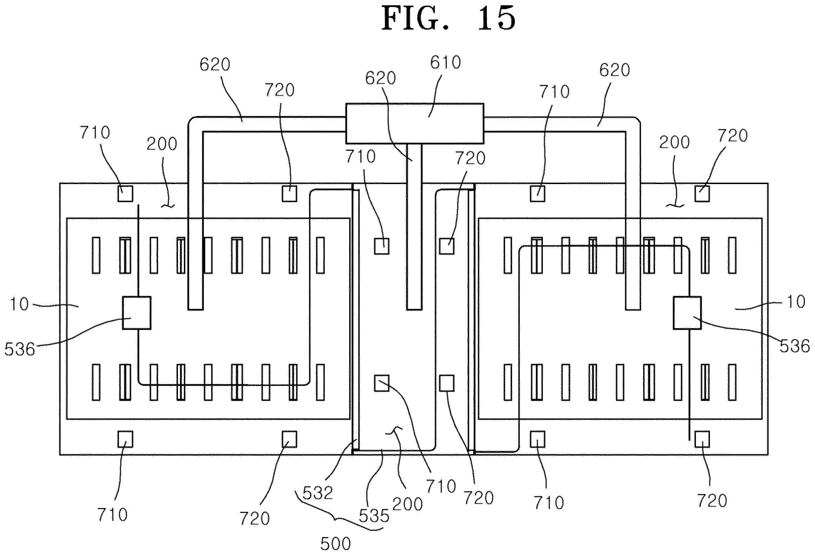

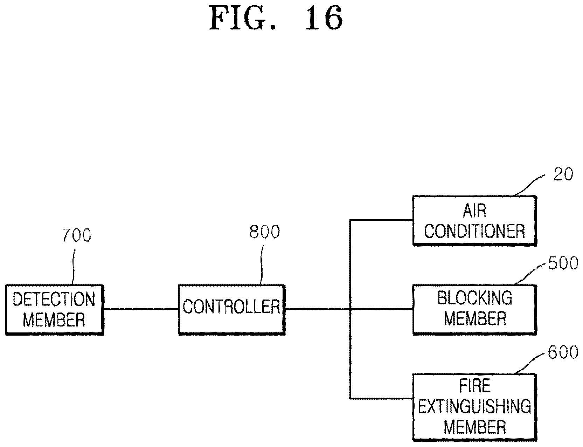

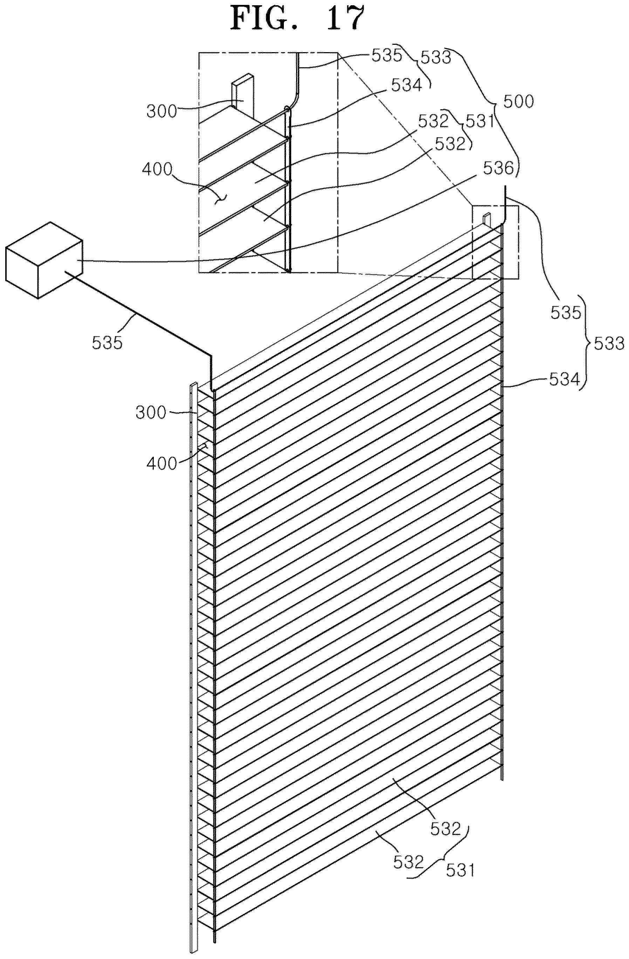

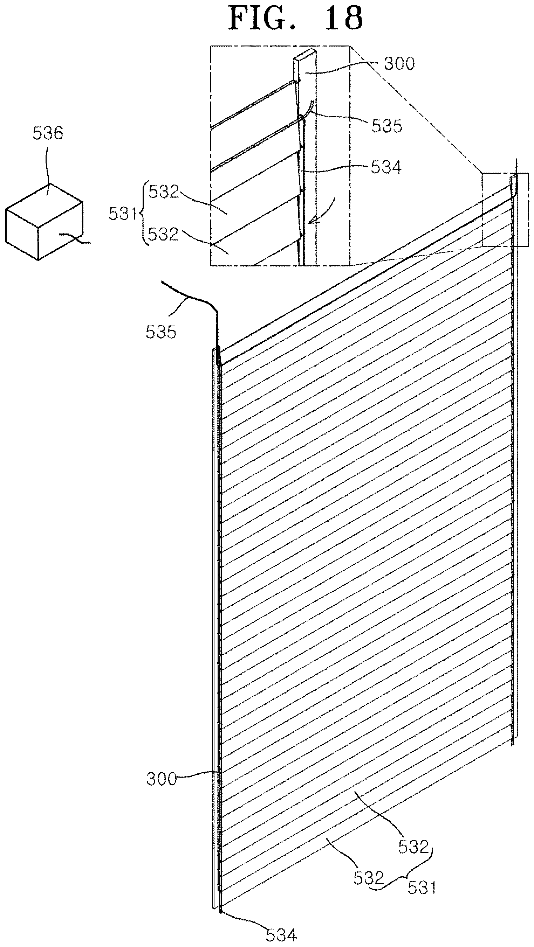

FIG. 13 is a schematic perspective view illustrating the configuration of the energy storage system according to some other embodiments of the present disclosure. FIG. 14 is a front view illustrating the configuration of the energy storage system according to some other embodiments of the present disclosure. FIG. 15 is a schematic plan view illustrating the configuration of the energy storage system according to some embodiments of the present disclosure. FIG. 16 is a schematic block diagram illustrating the configuration of the energy storage system according to some embodiments of the present disclosure. FIG. 17 is a schematic perspective view illustrating a configuration of a blocking member according to some embodiments of the present disclosure. FIG. 18 is a perspective view illustrating a state in which the blocking member in FIG. 4 closes a ventilation hole according to some embodiments of the present disclosure.

Referring to FIGS. 13 to 18, the energy storage system according to some embodiments includes a container 100, an accommodation portion 200, a partition wall 300, a ventilation hole 400, a blocking member 500, a fire extinguishing member 600, a detection member 700, and a controller 800.

The energy storage system according to some other embodiments of the present disclosure may be constructed to differ from the energy storage system according to some embodiments of the present disclosure only in a detailed configuration of the blocking member 500.

Accordingly, in describing the energy storage system according to some embodiments of the present disclosure, only the detailed configuration of the blocking member 500, which is not described in the energy storage system according to some other embodiments of the present disclosure previously described, will be described.

The description of the energy storage system according to some embodiments of the present disclosure previously mentioned may be applied to the remaining configuration of the energy storage system according to some embodiments of the present disclosure without any change.

The blocking member 500 according to some embodiments may include a damper member 531, an adjustment member 533, and an actuator 536.

The damper member 531 may be rotatably connected to the partition wall 300 and opens or closes the ventilation hole 400 according to a rotation direction. For example, the damper member 531 may rotate in a first direction to close the ventilation hole 400 and may rotate in a direction opposite to the first direction to open the ventilation hole 400. Here, the first direction may be a clockwise direction or a counterclockwise direction with respect to a rotation shaft of the damper member 531.

The damper member 531 according to some embodiments may include a plurality of dampers 532.

The damper 532 may be formed to have a flat plate shape. A longitudinal direction of the damper 532 may be parallel to a bottom surface of the container 100. Both sides of the damper 532 in the longitudinal direction may be rotatably connected to the partition wall 300 through a rotation shaft. Because a width direction of the damper 532 is perpendicular to the ventilation hole 400, the damper 532 may open the ventilation hole 400. In this state, as the damper 532 rotates in the first direction (e.g., clockwise direction in FIG. 17), an inner surface thereof may be disposed to face the ventilation hole 400, and the ventilation hole 400 may be closed.

The plurality of dampers 532 may be provided. The plurality of dampers 532 may be disposed to be vertically spaced apart from each other by a certain interval. The sum of areas of the plurality of dampers 532 may be larger than an area of the ventilation hole 400. In this case, when a pair of neighboring dampers 532 closes the ventilation hole 400, the neighboring dampers 532 may be disposed such that at least partial areas thereof overlap each other. Accordingly, when the plurality of dampers 532 fully rotate in the first direction, the dampers 532 may close the ventilation hole 400 without any gaps.

Fire-resistant paint may be applied on a surface of the damper 532 to prevent or substantially reduce heat damage in the event of a fire.

The adjustment member 533 is connected to the damper member 531 and selectively allows the damper member 531 to rotate in the first direction according to a temperature change. That is, when there is no separate temperature change, the control member 533 may restrict the damper member 531 from rotating in the first direction such that the ventilation hole 400 is maintained in an open state. In addition, when heated to a set temperature or higher by a flame or the like, the control member 533 may allow the damper member 531 to rotate in the first direction such that the ventilation hole 400 is closed.

The adjustment member 533 according to some embodiments may include a rod 534 and a rope 535.

The rod 534 is connected to the damper member 531 and applies a rotational force to the damper member 531 in the first direction. That is, when a separate external force is not applied to the damper member 531, the rod 534 may function as a component that rotates the damper member 531 in the first direction with dead load.

The rod 534 according to some embodiments may be formed to have an approximately bar shape. The rod 534 may be integrally coupled to an edge surface of the damper 532 through welding, bolting, or the like. The plurality of dampers 532 may be arranged in a longitudinal direction of the rod 534. The dampers 532 may be coupled to different positions of the rod 534 in the longitudinal direction of the rod 534. Accordingly, the rod 534 may synchronize operations of the plurality of dampers 532, that is, rotation speeds, rotation directions, rotation angles, or the like. A pair of rods 534 may be provided. The pair of rods 534 may be spaced apart from each other in the longitudinal direction of the damper 532 and may each be coupled to one of both sides of the damper 532 in the longitudinal direction.

The rope 535 is connected to the container 100 and the rod 534 and applies a rotational force to the damper member 531 in a direction opposite to the first direction. That is, the rope 535 may function as a component that cancels out a rotational force, which is applied to the damper member 531 in the first direction by the rod 534, with its own tension. Accordingly, when a fire has not occurred, the damper member 531 may maintain the ventilation hole 400 in an open state.

The rope 535 may be cut by the operation of the actuator 536 which will be described below. Accordingly, when a fire occurs, the rope 535 may release a rotational force acting on the damper member 531 in a direction opposite to the first direction and may induce the damper member 531 to rotate in the first direction. A design may be variously changed to change a set temperature in a temperature range in which the rope 535 may be cut when a fire occurs in the accommodation portion 200.

The rope 535 may be cut when heated to the set temperature or more due to contact with a flame or smoke. Accordingly, the rope 535 may be cut even when the actuator 536 is damaged or malfunctions, thereby further improving the reliability of fire blocking performance. Here, the set temperature at which the rope 535 is cut may be different from the set temperature detected from a temperature sensor 710.

The rope 535 may be disposed above the accommodation portion 200 where relatively high-temperature air and smoke are concentrated due to convection in the event of a fire. In this case, the rope 535 may be supported on a ceiling surface of the container 100 through a clamp or the like. Accordingly, even in a situation in which it is difficult for the rope 535 to come into direct contact with a flame due to a volume of the accommodation portion 200 itself, the rope 535 may be cut quickly.

The rope 535 may pass through an upper end of the rod 534, and both sides thereof may each be disposed inside one of neighboring accommodation portions 200. Accordingly, the rope 535 may be prevented from being cut only by a fire occurring in one of a pair of neighboring accommodation portions 200.

The ropes 535 provided in different blocking members 500 may be connected to each other. For example, as shown in FIG. 15, three accommodation portions 200 may be arranged in a line, and thus, a pair of blocking members 500 that individually open or close the ventilation holes 400 formed in different partition walls 300 may be individually installed at both sides of the accommodation portion 200 disposed at a central portion. Both sides of the rope 535 provided in each blocking member 500 may be disposed inside the neighboring accommodation portions 200, and thus one end of the ropes 535 provided in different blocking members 500 may be simultaneously disposed and connected to each other inside the accommodation portion 200 disposed at the central portion. Accordingly, when a fire occurs in one accommodation portion 200 among the plurality of accommodation portions 200, a plurality of blocking members 500 may simultaneously close the ventilation holes 400 formed in different partition walls 300.

The actuator 536 generates a driving force to cut the rope 535. The actuator 536 according to some embodiments may be an electric cutter that is connected to the rope 535 and is capable of cutting the rope 535 by receiving power from the outside (e.g., from the controller 800). A plurality of actuators 536 may be provided. The plurality of actuators 536 may be disposed to be spaced apart from each other in an extending direction of the rope 535.

Hereinafter, the operation of the energy storage system according to some embodiments of the present disclosure will be described.

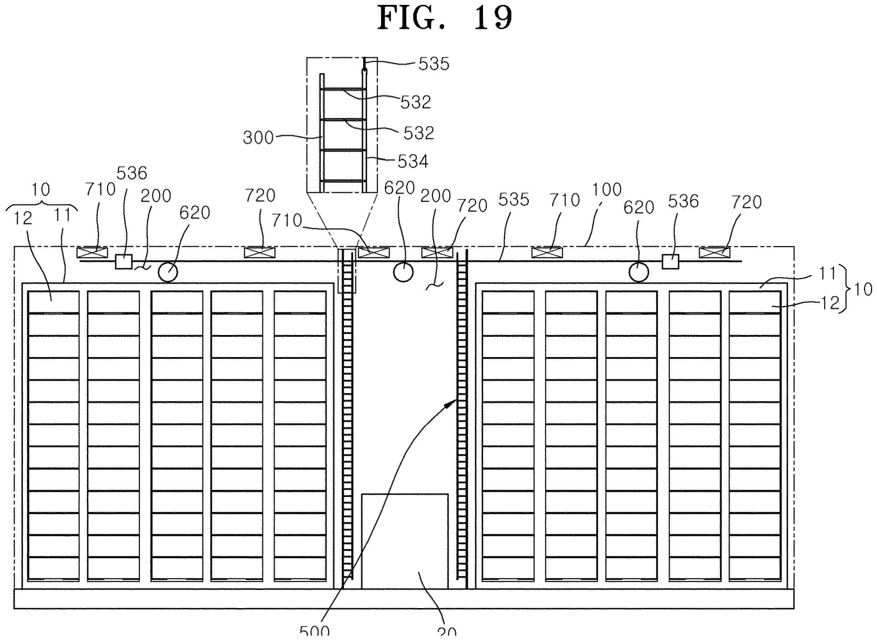

FIGS. 19 to 22 are schematic views illustrating an operation process of the energy storage system according to some other embodiments of the present disclosure.

In some embodiments, the controller 800 performs the same operations as those described in some embodiments of the present disclosure described above and may determine whether a fire has occurred.

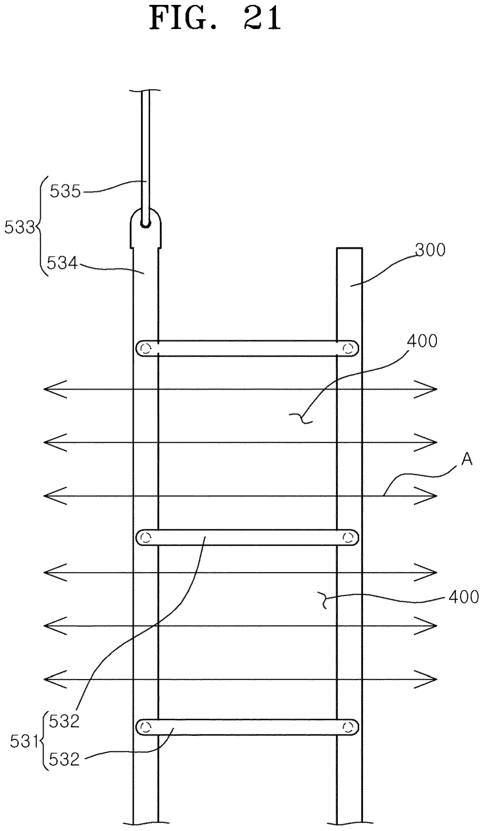

Referring to FIGS. 19 and 21, when the controller 800 determines that a fire has not occurred, the rope 535 maintains an uncut state, and a rotational force applied by the rod 534 to the damper 532 in the first direction is canceled out by the tension of the rope 535.

Accordingly, the damper 532 may maintain a state in which the width direction is perpendicular to the ventilation hole 400, and the ventilation hole 400 may be maintained in an open state.

As the ventilation hole 400 is maintained in an open state, air A flowing inside one accommodation portion 200 may receive a flow force from the air conditioner 20 to be transferred into a neighboring accommodation portion 200 through the ventilation hole 400 and may circulate through the plurality of accommodation portions 200.

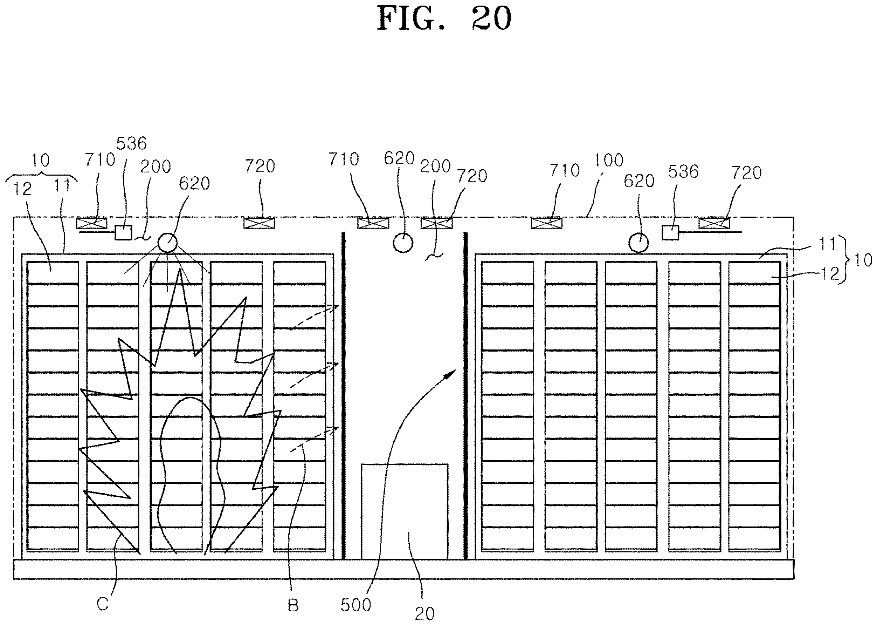

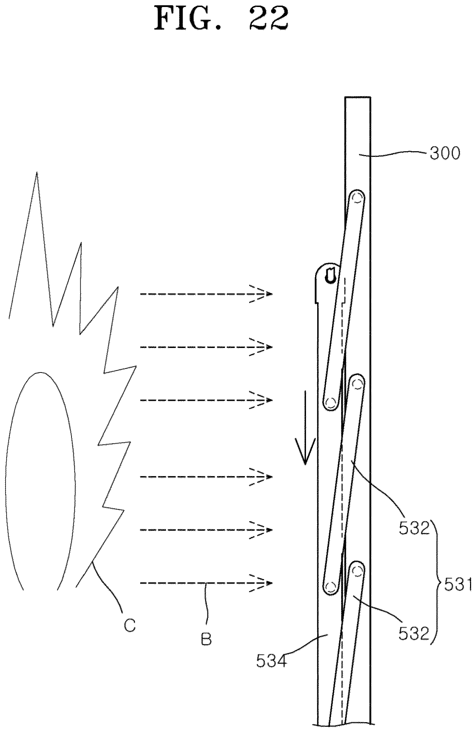

Referring to FIGS. 20 and 22, when the controller 800 determines that a fire has occurred, the controller 800 may generate an emergency signal and may transmit a fire operation signal to the air conditioner 20 to stop the operation of the air conditioner 20.

The controller 800 may transmit the fire operation signal to the actuator 536 to close the ventilation hole 400.

For example, when receiving the fire operation signal from the controller 800, the actuator 536 cuts the rope 535.

As the rope 535 is cut, the tension applied to the damper 532 by the rope 535 is released, and the damper 532 is rotated in the first direction by dead load of the rod 534.

The damper 532 rotates in the first direction and closes the ventilation hole 400.

As the ventilation hole 400 is completely closed, a flame C and smoke B generated inside the accommodation portion 200 may not flow into the ventilation hole 400, and fire propagation through the ventilation hole 400 may be blocked.

When the rope 535 is not cut properly due to damage or malfunction of the actuator 536, the rope 535 may be cut by being heated to the set temperature or more through contact with the flame C or smoke B generated in the accommodation portion 200.

In addition, the controller 800 transmits a fire operation signal to the extinguishing member 600, and the extinguishing member 600 sprays a fire extinguishing liquid into the accommodation portion 200 to extinguish a fire in the accommodation portion 200. In this case, the controller 800 may control the operation of a pump such that the fire extinguishing liquid is supplied only to a spray line 620 disposed inside the accommodation portion 200, in which it is determined that a fire has occurred, among a plurality of spray lines 620.

Hereinafter, the configuration of an energy storage system according to some other embodiments of the present disclosure will be described.

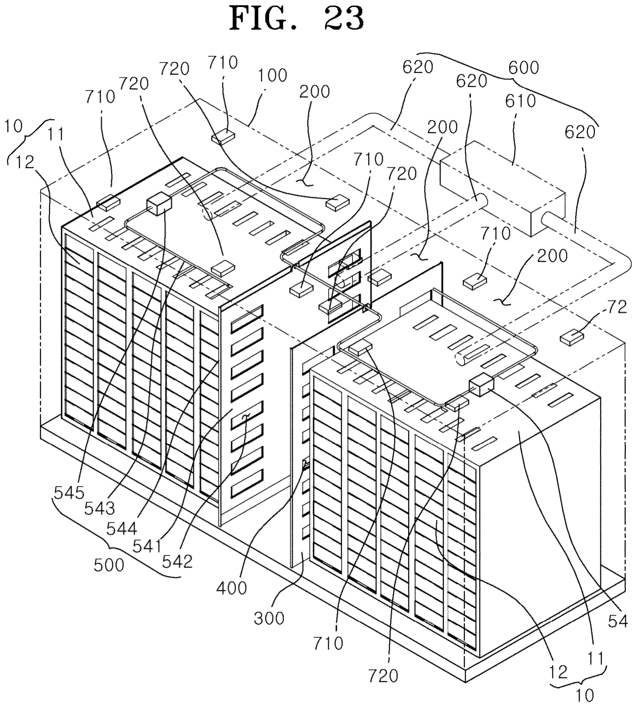

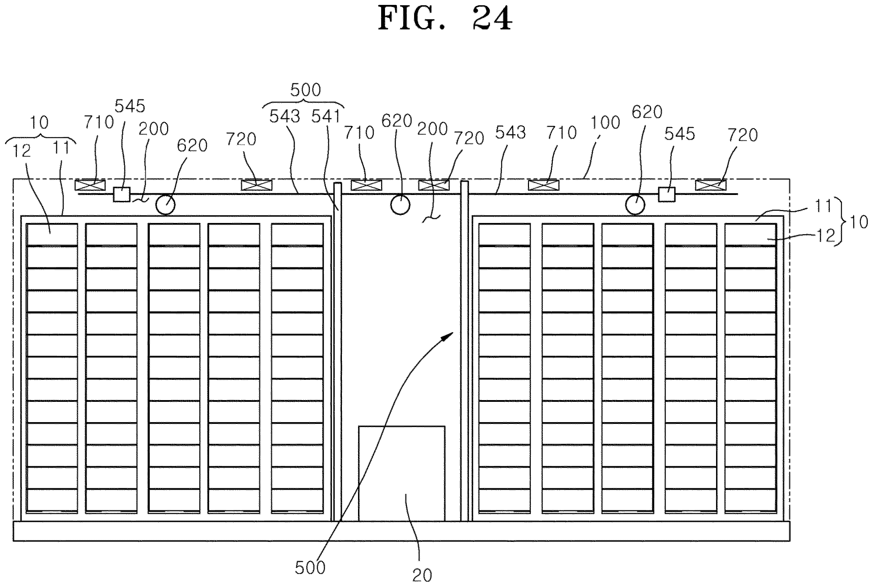

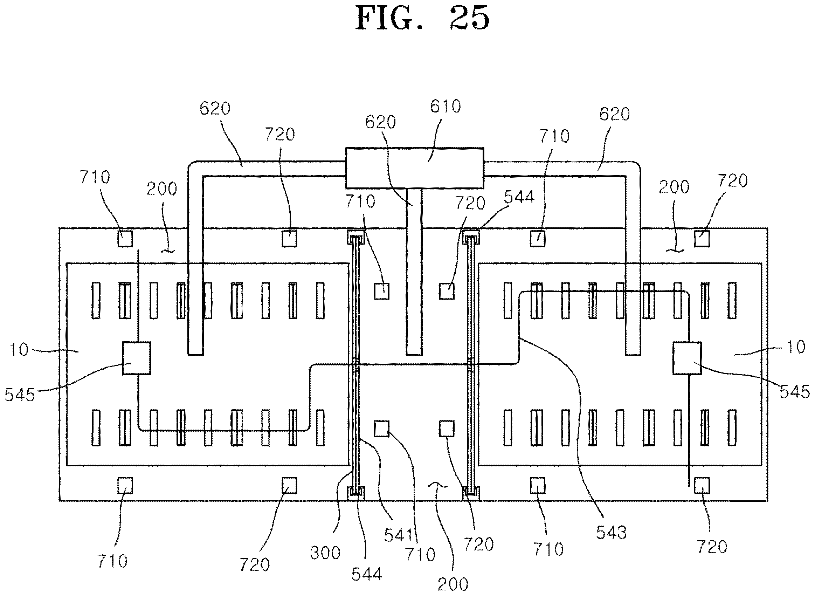

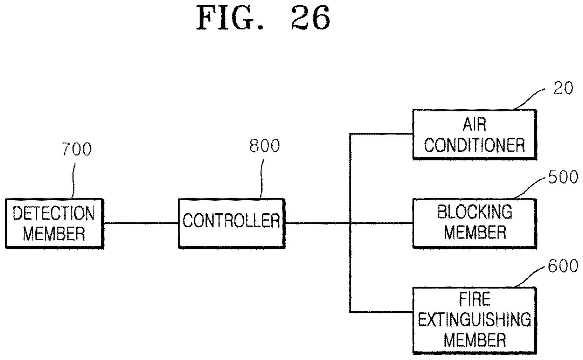

FIG. 23 is a schematic perspective view illustrating the configuration of the energy storage system according to some embodiments of the present disclosure. FIG. 24 is a schematic front view illustrating the configuration of the energy storage system according to some embodiments of the present disclosure. FIG. 25 is a schematic plan view illustrating the configuration of the energy storage system according to some embodiments of the present disclosure. FIG. 26 is a schematic block diagram illustrating the configuration of the energy storage system according to some embodiments of the present disclosure.

Referring to FIGS. 23 to 26, the energy storage system according to some embodiments includes a container 100, an accommodation portion 200, a partition wall 300, a ventilation hole 400, a blocking member 500, a fire extinguishing member 600, a detection member 700, and a controller 800.

The energy storage system according to some embodiments of the present disclosure may be constructed to differ from the energy storage system according to some embodiments of the present disclosure described previously in a detailed configuration of the blocking member 500.

Accordingly, in describing the energy storage system according to some embodiments of the present disclosure, only the detailed configuration of the blocking member 500, which is not described in the energy storage system according to some embodiments of the present disclosure described previously, will be described.

The description of the energy storage system according to some embodiments of the present disclosure may be applied to the configuration of the energy storage system according to some other embodiments of the present disclosure without any change.

The blocking member 500 according to some embodiments may include a movable partition wall 541, a movable hole 542, a rope 543, and an actuator 545.

The movable partition wall 541 is disposed to face the partition wall 300 and is installed to be movable between a first position and a second position.

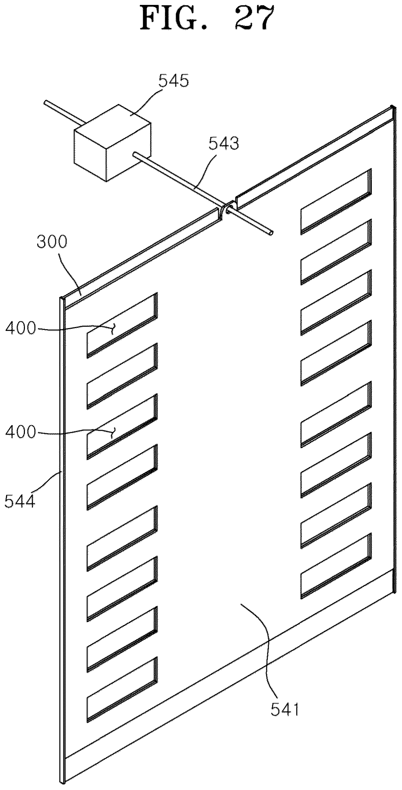

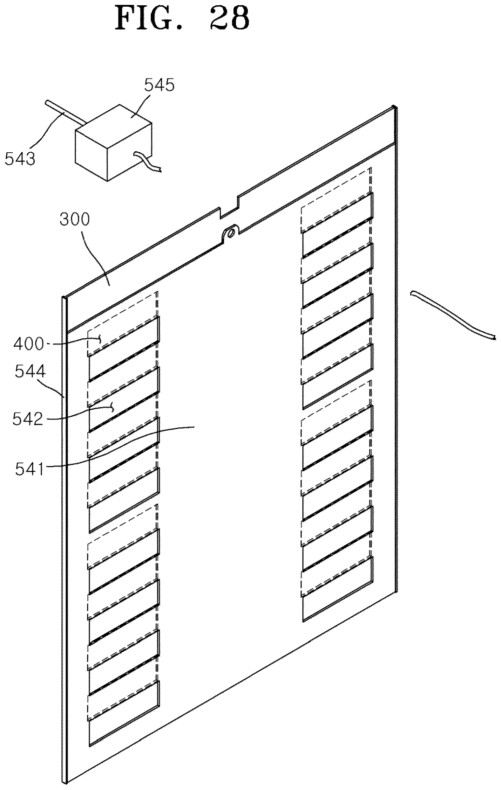

FIG. 27 is a schematic perspective view illustrating a state in which the movable partition wall according to some embodiments of the present disclosure is disposed at the first position. FIG. 28 is a schematic perspective view illustrating a state in which the movable partition wall according to some embodiments of the present disclosure is disposed at the second position.

Referring to FIGS. 23 to 28, the movable partition wall 541 according to some embodiments may be formed to have an approximately flat plate shape and may be disposed parallel to the partition wall 300. Inner surfaces of the movable partition wall 541 and the partition wall 300 may be disposed to face each other. Fire-resistant paint may be applied on an outer surface of the movable partition wall 541 to prevent or substantially reduce heat damage in the event of a fire.

The movable partition wall 541 may be installed to be elevatable in a direction perpendicular to a bottom surface of the container 100. In this case, a height of the movable partition wall 541 may be formed to be less than a height of the partition wall 300. Here, a state in which the movable partition wall 541 is positioned at the second position may be a state in which the movable partition wall 541 is completely lowered to be in contact with the bottom surface of the container 100. In addition, a state in which the movable partition wall 541 is positioned at the first position may be a state in which the movable partition wall 541 is lifted to a certain level from the second position. When a separate external force is not applied, the movable partition wall 541 may be positioned at the second position by dead load.

The movable hole 542 is formed to pass through the movable partition wall 541 and selectively connects with the ventilation hole 400 in conjunction with the movement of the movable partition wall 541. For example, as the movable partition wall 541 is positioned at the first position, the movable hole 542 may be disposed to face the ventilation hole 400 and may be connected with the ventilation hole 400 to allow air to flow through the ventilation hole 400. As the movable partition wall 541 is positioned at the second position, the movable hole 542 may be disposed to be misaligned with the ventilation hole 400 and may block air, flame, or smoke from flowing through the ventilation hole 400.

A plurality of movable holes 542 may be formed. Each of the plurality of movable holes 542 may be disposed to individually face one ventilation hole 400 as the movable partition wall 541 is positioned at the first position. A shape of the movable hole 542 may be a shape corresponding to a shape of the ventilation hole 400.

The rope 543 is connected to the container 100 and the movable partition wall 541. The rope 543 may function as a component that positions the movable partition wall 541 at the first position by cancelling out a weight of the movable partition wall 541 with tension thereof. Accordingly, the ventilation hole 400 may be maintained in an open state when a fire does not occur.

The rope 543 may be cut by the operation of the actuator 545 which will be described below. Accordingly, when a fire occurs, the rope 543 may release the tension applied to the movable partition wall 541, thereby inducing the movable partition wall to move to the second position by dead load to close the ventilation hole 400.

In addition, the rope 543 may be cut when heated to a set temperature or more by a flame or the like. Accordingly, the rope 543 may be cut even when the actuator 545 is damaged or malfunctions, thereby further improving (e.g., increasing) the reliability of fire blocking performance. Here, the set temperature at which the rope 43 is cut may be different from the set temperature detected from a temperature sensor 710.

The rope 543 may be disposed above the accommodation portion 200 where relatively high temperature air and smoke are concentrated due to convection in the event of a fire. In this case, the rope 543 may be supported on a ceiling surface of the container 100 through a clamp or the like. Accordingly, even in a situation in which it is difficult for the rope 543 to come into direct contact with a flame due to a volume of the accommodation portion 200 itself, the rope 543 may be cut quickly.

The rope 543 may pass through an upper end of the movable partition wall 541, and both sides thereof may each be disposed inside one of neighboring accommodation portions 200. Accordingly, the rope 543 may be prevented from being cut only by a fire occurring in one of a pair of neighboring accommodation portions 200.

The ropes 543 provided in different blocking members 500 may be connected to each other. For example, as shown in FIG. 24, three accommodation portions 200 may be arranged in a line, and thus a pair of blocking members 500 that individually open or close the ventilation holes 400 formed in different partition walls 300 may be individually installed at both sides of the accommodation portion 200 disposed at a central portion. Both sides of the rope 543 provided in each blocking member 500 may be disposed inside the neighboring accommodation portions 200, and thus one end of the ropes 543 provided in different blocking members 500 may be simultaneously disposed and connected to each other inside the accommodation portion 200 disposed at the central portion. Accordingly, when a fire occurs in one accommodation portion 200 among a plurality of accommodation portions 200, a plurality of blocking members 500 may simultaneously close the ventilation holes 400 formed in different partition walls 300.

The actuator 545 generates a driving force to cut the rope 543. The actuator 545 according to some embodiments may be an electric cutter that is connected to the rope 543 and is capable of cutting the rope 543 by receiving power from the outside. A plurality of actuators 545 may be provided. The plurality of actuators 545 may be disposed to be spaced apart from each other in an extending direction of the rope 543.

The blocking member 500 according to some embodiments may further include a guide rail 544 that guides the movement of the movable partition wall 541. A pair of guide rails 544 may be provided. The pair of guide rails 544 may be disposed at both sides of each of the partition wall 300 and the movable partition wall 541.

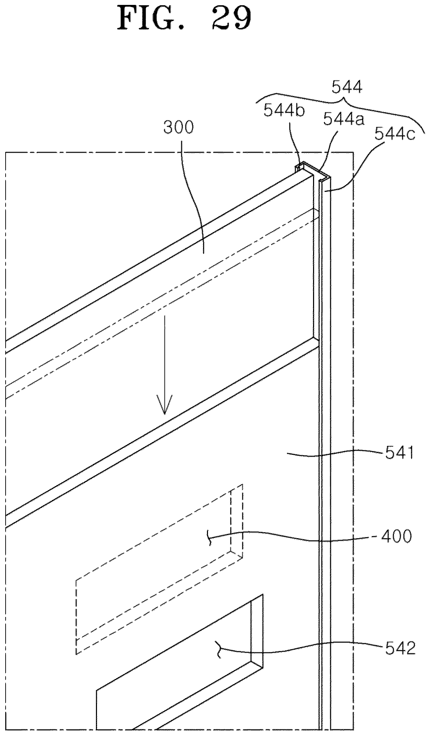

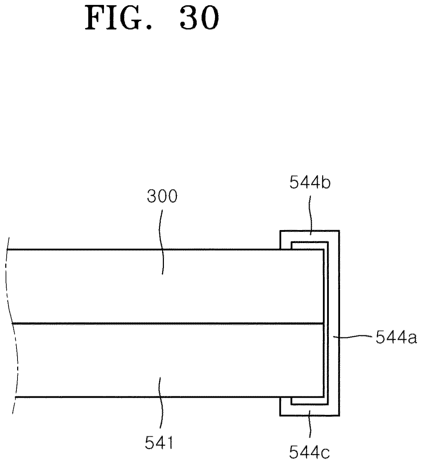

FIG. 29 is a schematic enlarged view illustrating a configuration of the guide rail according to some embodiments of the present disclosure. FIG. 30 is a schematic cross-sectional view illustrating the configuration of the guide rail according to some embodiments of the present disclosure.

Referring to FIGS. 23 to 30, the guide rail 544 according to some embodiments may include a guide body 544a, a first extension portion 544b, and a second extension portion 544c.

The guide body 544a is fixed to the container 100 and supports the first extension portion 544b and the second extension portion 544c which will be described below. The guide body 544a according to some embodiments may be formed to have a flat pillar shape. Upper and lower ends of the guide body 544a may each be fixed to one of a ceiling surface and a bottom surface of the container 100. The guide body 544a may be disposed perpendicular to the partition wall 300 and the movable partition wall 541. An inner surface of the guide body 544a may be disposed to face a side surface of each of the partition wall 300 and the movable partition wall 541.

The first extension portion 544b may extend from one end of the guide body 544a and may be disposed to face an outer surface of the partition wall 300. The first extension portion 544b may be fixed to the outer surface of the partition wall 300 through welding, bolting, or the like.

The second extension portion 544c extends from the other end of the guide body 544a and is disposed to face an outer surface of the movable partition wall 541. The outer surface of the movable partition wall 541 may be slidably in contact with the second extension portion 544c. Accordingly, a relative angle and distance of the movable partition wall 541 with respect to the partition wall 300 may be maintained constant while being moved to the first and second positions.

Hereinafter, the operation of the energy storage system according to some embodiments of the present disclosure will be described.

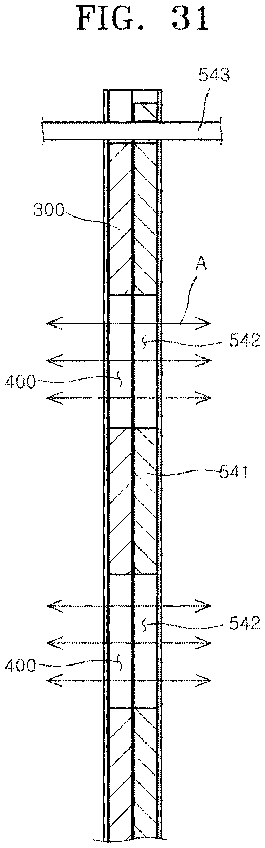

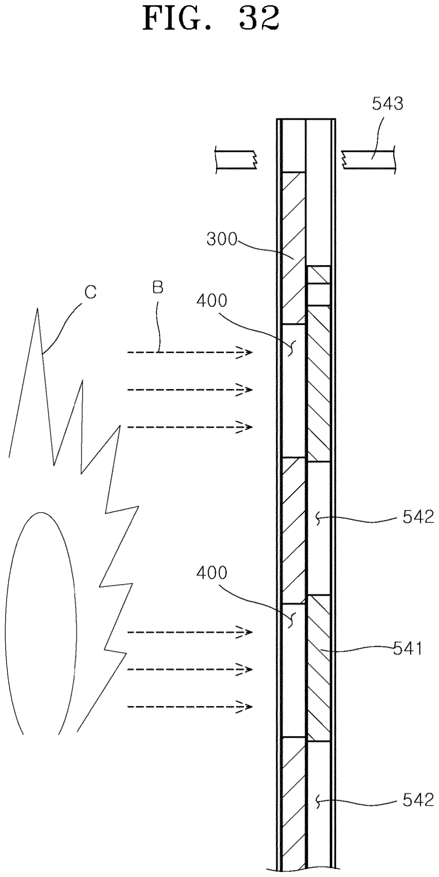

FIGS. 31 and 32 are schematic views illustrating an operation process of the energy storage system according to some embodiments of the present disclosure.

In some embodiments, the controller 800 performs the same operations as those described in some other embodiments of the present disclosure and may determine whether a fire has occurred.

Referring to FIGS. 23 and 31, when the controller 800 determines that a fire has not occurred, the rope 543 maintains an uncut state.

As tension by the rope 543 cancels out a weight of the movable partition wall 541, the movable partition wall 541 maintains a state of being positioned at the first position.

Accordingly, the movable hole 542 may be disposed to face the ventilation hole 400, and the ventilation hole 400 may be maintained in an open state.

As the ventilation hole 400 is maintained in an open state, air A flowing inside one accommodation portion 200 may receive a flow force from the air conditioner 20 to be transferred into a neighboring accommodation portion 200 through the ventilation hole 400 and may circulate through the plurality of accommodation portions 200.

Referring to FIGS. 23 and 32, when the controller 800 determines that a fire has occurred, the controller 800 may generate an emergency signal and may transmit a fire operation signal to an air conditioner 20 to stop the operation of the air conditioner 20.

The controller 800 may transmit the fire operation signal to the actuator 545 to close the ventilation hole 400.

For example, when receiving the fire operation signal from the controller 800, the actuator 545 cuts the rope 543.

As the rope 543 is cut, the tension applied to the movable partition wall 541 by the rope 543 is released, and the movable partition wall 541 is moved to the second position by dead load.

As the movable partition wall 541 is moved to the second position, the movable hole 542 is disposed to be misaligned with the ventilation hole 400, and the ventilation hole 400 is closed. In other words, the ventilation hole 400 is blocked by the movable partition wall 541.

As the ventilation hole 400 is completely closed, a flame C and smoke B generated inside the accommodation portion 200 may not flow into the ventilation hole 400, and fire propagation through the ventilation hole 400 may be blocked.

When the rope 543 is not cut properly due to damage or malfunction of the actuator 545, the rope 543 may be cut by being heated to the set temperature or more through contact with the flame C or smoke B generated in the accommodation portion 200.

In addition, the controller 800 may transmit a fire operation signal to the extinguishing member 600, and the extinguishing member 600 may spray fire extinguishing liquid into the accommodation portion 200 to extinguish a fire in the accommodation portion 200. In this case, the controller 800 may control the operation of the pump such that the fire extinguishing liquid is supplied only to the spray line 620 disposed inside the accommodation portion 200, in which it is determined that a fire has occurred, among the plurality of spray lines 620.

According to the present disclosure, in normal times, internal air of any one accommodation portion is allowed to be transferred to a neighboring accommodation portion through a ventilation hole, thereby uniformly maintaining the internal environment of a plurality of accommodation portions.

According to the present disclosure, in the event of a fire, a flame or smoke generated in any one accommodation portion is blocked from being transmitted to a neighboring accommodation portion through a ventilation hole, thereby preventing or substantially reducing the fire from spreading to the entire area of the container.

According to the present disclosure, a controller automatically opens or closes a ventilation hole by controlling the operation of a blocking member based on data detected by a detection member, thereby securing accurate fire blocking performance.

According to the present disclosure, a rope can be cut through contact with a flame or smoke even when an actuator is damaged or malfunctions, thereby further improving the reliability of fire blocking performance.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative, and it should be understood that various modifications and equivalent other embodiments can be derived by those skilled in the art on the basis of the embodiments.

## Claims

1. An energy storage system comprising:
a container;
a plurality of accommodation portions in the container and configured to accommodate a battery rack or an air conditioner;
a partition wall between each pair of adjacent accommodation portions;
a ventilation hole passing through the partition wall and connecting with the adjacent accommodation portions; and
a blocking member configured to selectively open or close the ventilation hole.

2. The energy storage system as claimed in claim 1, wherein the blocking member comprises:
a damper member rotatably connected to the partition wall and configured to open or close the ventilation hole according to a rotation direction; and
an actuator connected to the damper member and configured to generate a rotational force to adjust the rotation direction of the damper member.

3. The energy storage system as claimed in claim 1, wherein the blocking member comprises:
a damper member rotatably connected to the partition wall and configured to open or close the ventilation hole by rotating in a first direction;
a rod connected to the damper member and configured to apply a rotational force to the damper member in the first direction;
a rope connected to the container and the rod and configured to apply a rotational force to the damper member in a direction opposite to the first direction; and
an actuator configured to generate a driving force to cut the rope.

4. The energy storage system as claimed in claim 3, wherein the rope is cut when heated to a set temperature or more.

5. The energy storage system as claimed in claim 3 or 4, wherein a plurality of partition walls and a plurality of blocking members are provided, and
wherein the ropes provided in each of the blocking members are connected to each other.

6. The energy storage system as claimed in claim 1, wherein the blocking member comprises:
a movable partition wall positioned to face the partition wall and movably installed between a first position and a second position;
a movable hole formed to pass through the movable partition wall and positioned to face the ventilation hole as the movable partition wall is positioned at the first position;
a rope connected to the movable partition wall and configured to position the movable partition wall at the first position; and
an actuator configured to generate a driving force to cut the rope, wherein, in response to the rope being cut, the movable partition wall moves from the first position to the second position.

7. The energy storage system as claimed in claim 6, wherein the rope is cut when heated to a set temperature or more.

8. The energy storage system as claimed in claim 6 or 7, wherein a plurality of partition walls and a plurality of blocking members are provided, and
wherein the ropes provided in each of the blocking members are connected to each other.

9. The energy storage system as claimed in claim 6, 7 or 8, wherein the blocking member further comprises a guide rail configured to guide a movement of the movable partition wall.

10. The energy storage system as claimed in any preceding claim, further comprising:
a detection member configured to collect environmental data inside at least one of the plurality of accommodation portions; and
a controller configured to determine whether a fire has occurred based on the environmental data collected by the detection member and configured to control operations of the blocking member and the air conditioner.

11. The energy storage system as claimed in claim 10, wherein the detection member comprises:
a temperature sensor configured to detect a temperature inside the at least one of the plurality of accommodation portions; and
a smoke sensor configured to detect smoke generated inside the at least one of the plurality of accommodation portions.

12. The energy storage system as claimed in claim 11, wherein:
a plurality of temperature sensors are installed in each of the accommodation portions,
wherein, in response to a number of the temperature sensors that detect a temperature higher than or equal to a set temperature in any one of the accommodation portions being equal to a number n or more, the controller is configured to determine that the fire has occurred,
wherein, in response to determining that the fire has occurred, the controller is configured to generate an emergency signal,
wherein, in response to a number of the temperature sensors that detect the temperature higher than or equal to the set temperature in any one of the accommodations portions being 1 or more and less than n, the controller is configured to generate a warning signal, and
n is a natural number of 2 or more.

13. The energy storage system as claimed in claim 11 or 12, wherein:
a plurality of smoke sensors are installed in each of the accommodation portions,
wherein, in response to a number of the smoke sensors that detect smoke in any one of the accommodation portions being equal to a number m or more, the controller is configured to determine that the fire has occurred,
wherein, in response to determining that the fire has occurred, the controller is configured to generate an emergency signal,
wherein, in response to a number of the smoke sensors that detect smoke in any one of the accommodation portions being 1 or more and less than m, the controller is configured to generate a warning signal, and
m is a natural number of 2 or more.

14. The energy storage system as claimed in claim 11, wherein one or more temperature sensors and one or more smoke sensors are installed in each of the accommodation portions,
wherein, in response to a temperature detected by any one of the temperature sensors being higher than or equal to a set temperature and smoke being detected by any one of the smoke sensors, the controller is configured to determine that the fire has occurred,
wherein, in response to determining that the fire has occurred, the controller is configured to generate an emergency signal, and
wherein, in response to a temperature detected by any one of the temperature sensors being higher than or equal to the set temperature, and the smoke being detected by any one of the smoke sensors, the controller is configured to generate a warning signal.

15. The energy storage system as claimed in any one of claims 10 to 14, further comprising:
a fire extinguishing member configured to spray a fire extinguishing liquid into at least one of the plurality of accommodation portions.
